# EUROPÄISCHE PATENTSCHRIFT

(11) **EP 1 304 653 B1**
(45) Veröffentlichungstag und Bekanntmachung des Hinweises auf die Patenterteilung: **15.11.2006**
(21) Anmeldenummer: 02020042.4
(22) Anmeldetag: 06.09.2002
(51) Int. Cl.: G06T 11/60, G06F 3/033, G06F 17/30

(54) **System und Verfahren zur Anzeige von Bildern**
System and method for displaying images
Système et méthode d'affichage d'images

(30) Priorität: 09.10.2001 DE 10149634
(43) Veröffentlichungstag der Anmeldung: 23.04.2003
(73) Patentinhaber: MeVis BreastCare GmbH & Co. KG, 28359 Bremen (DE)
(72) Erfinder: Bödicker, Anke Dr., 28359 Bremen (DE); Dechow, Dietmar, 28203 Bremen (DE)
(74) Vertreter: Richardt, Markus Albert

(56) Entgegenhaltungen:
- EP-A- 0 543 414
- "Qimage Pro V2.6 User Manual" 6. August 2001 (2001-08-06), DIGITAL DOMAIN INC. , XP002301805 sec. "Getting Familiar with Qimage Pro"
- RANDY GLASS: "Qimage Pro software review" FEATHER RIVER CANYON NEWS, [Online] 14. September 2000 (2000-09-14), XP002301804 Gefunden im Internet: URL:http://www.quiknet.com/~frcn/FramCont. html> [gefunden am 2004-10-21]
- "ECAT Software Operating Instructions, Version 7.0.3" 1997, CTI PET SYSTEMS, INC. , KNOXVILLE, TN, USA , XP002302137 * Seite 123 - Seite 129 *
- EVERTSZ ET AL: "Soft-copy reading environment for screening mammography" IWDM 2000 ABSTRACT BOOK, 11. Juni 2000 (2000-06-11), Seite 100, XP002301857 TORONTO, CANADA

## Beschreibung

Brust (Mammogramme) erstellt und auf Verdachtsmomente hin begutachtet. Bei jeder Untersuchung werden dabei typischerweise von jeder Brust eine Aufnahme von oben (craniocaudal, CC) und eine Aufnahme von der Seite (mediolateral oblique, MLO) angefertigt. Meist werden diese vier Mammogramme mit den vier Bildern der Voruntersuchung verglichen, so dass der Radiologe in der Regel acht Mammogramme pro Fall betrachten muss. Zusätzlich kann es wünschenswert sein, per Computer aufbereitete Mammogramme darzustellen, etwa solche bei denen der Kontrast künstlich angehoben wurde um verdächtige Strukturen deutlicher darzustellen.

Für die Begutachtung dieser Vielzahl von Bildern steht dem Radiologen nur wenig Zeit zur Verfügung. Ein gut ausgebildeter Radiologe ist in der Lage, etwa 100 Fälle pro Stunde zu begutachten. Die sichere Beurteilung von acht oder mehr Aufnahmen in so kurzer Zeit ist nur dann möglich, wenn diese dem Radiologen in stets der gleichen, vertrauten Form dargeboten werden und eventuell vorhandene, zusätzliche Ansichten oder Aufnahmen (auch Bilder anderer Modalitäten, z.B. Ultraschallaufnahmen oder MR-Mammogramme) schnell verfügbar sind.

Beim digitalen Mammographie-Screening verwendet der Radiologe eine spezielle Screening-Befundungsstation, die üblicherweise aus einem Computer hoher Leistung mit zwei hochauflösenden Monitoren und speziellen Eingabegeräten zur Steuerung des Systems besteht. Die Monitore eines solchen Systems müssen in der Lage sein, mindestens 2K x 2K Pixel mit einer Grauwerttiefe von 8 oder 10 Bit/Pixel darzustellen. Trotz dieser hohen Auflösung müssen digitale Mammogramme, die aus 4K x 4K Pixeln oder mehr bestehen, verkleinert dargestellt oder in Auschnitten betrachtet werden.

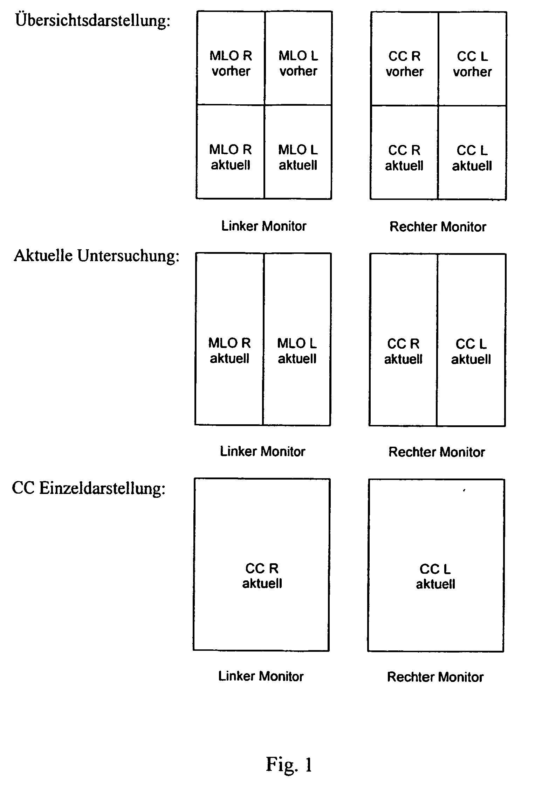

Zur Unterstützung eines flüssigen Arbeitsablaufes bietet eine Befundungsstation mehrere standardisierte Anordnungen von Bildern auf den beiden Monitoren, wobei jeder Monitor in zwei oder vier Teilfenster unterteilt werden kann. Typische Beispiele für solche Anordnungen sind in der Figur 1 dargestellt.

Die möglichen Anordnungen sowie die Reihenfolge, in der sie dem Radiologen zur Ansicht gebracht werden, sind meist konfigurierbar. Über diese Standardanordnungen hinaus muss der Radiologe die Möglichkeit haben, alle verfügbaren Bilder in beliebigen Anordnungen darstellen zu können. Beispielsweise könnte es für einen Vergleich notwendig sein, die aktuelle CC-Aufnahme einer Brust links und die entsprechende Aufnahme der Voruntersuchung rechts darzustellen, obwohl diese Anordnung in der Konfiguration nicht vorgesehen ist. Dabei muss das manuelle Anordnen der einzelnen Bilder schnell erfolgen können und darf nur einen geringen Interaktionsaufwand erfordern, um den Arbeitsablauf nicht aufzuhalten.

Es existieren bereits verschiedene Programme, die in der Lage sind, mehrere digitale Bilder in einer frei wählbaren Anordnung auf dem Bildschirm darzustellen. Bei den meisten dieser Programme sind folgende Interaktionsschritte notwendig, um diese Aufgabe durchzuführen:
1. Einstellen der gewünschten Unterteilung des Bildschirms oder der Bildschirme.
2. Auswahl eines Teilfensters, z.B. durch Aktivieren des Fensters mit dem Mauszeiger.
3. Auswahl des in diesem Teilfenster darzustellenden Bildes, z.B. über einen Befehl zum Öffnen des gewünschten Bildes.

Die Schritte 2. und 3. müssen hierbei für jedes darzustellende Bild wiederholt werden. Bei einem anderen Lösungsansatz wird das bekannte "Drag-and-Drop" verwendet, um die einzelnen Bilder in den jeweiligen Fenstern anzuzeigen. Hierzu steht ein Übersichtsfenster zur Verfügung, das eine Liste aller verfügbaren Bilder enthält. Die einzelnen Bilder sind in dieser Liste durch ihre Namen oder eine symbolische Darstellung repräsentiert. Für jedes darzustellende Bild wird nun das entsprechende Element dieser Liste mit der Maus angeklickt, auf das gewünschte Fenster gezogen und dort "fallen gelassen".

Beide Lösungsansätze haben den Nachteil, dass mit dem Mauszeiger lange Wege auf dem Bildschirm oder den Bildschirmen zurückgelegt werden müssen, was gerade bei großen Monitoren einen erheblichen Interaktionsaufwand darstellt. Darüber hinaus ist der Schritt zum Öffnen eines Bildes bei dem ersten Lösungsansatz mit weiteren Mausklicks und Interaktionsschritten verbunden, die den Benutzer zusätzlich aufhalten.

Ein weiterer Nachteil besteht darin, dass nicht auf einen Blick ersichtlich ist, welches Bild in welchem Teilfenster angezeigt wird. Weiterhin besteht bei Systemen, die nicht auf radiologische Anwendungen zugeschnitten sind, oft nicht die Möglichkeit, die standardmäßig genutzten Aufteilungen der Bildschirme in jeweils ein, zwei oder vier Teilfenster schnell vorzunehmen. Statt dessen muss die jeweilige Aufteilung manuell durch Öffnen und Anordnen der einzelnen Fenster vorgenommen werden.

Ein auf die Anforderungen des digitalen Mammographie-Screenings zugeschnittener Lösungsansatz ist in US-Patent Nr. 6,243,095 B1 beschrieben. Hier wird von einer festen Anordnung aller verfügbaren Aufnahmen (im Normalfall acht) ausgegangen, die in einem Navigationsfenster mit symbolischer Darstellung der einzelnen Aufnahmen angezeigt ist. Zur Auswahl eines darzustellenden Bildes bewegt der Benutzer einen Mauszeiger über das Navigationsfenster. Sobald der Zeiger über dem zu einer Ansicht gehörenden Symbol steht, wird das entsprechende Bild in einem der Monitore angezeigt. Mit zwei Maustasten kann zusätzlich zwischen verschiedenen Auflösungsmodi umgeschaltet werden, so dass auch die Darstellung von zwei oder vier Bildern auf einem Monitor möglich ist.

Bei diesen Darstellungen können jedoch nur solche Bilder gleichzeitig auf einem Monitor angezeigt werden, die in der in dem Navigatorfenster vorgegebenen Standardanordnung benachbart sind. Darüber hinaus wird vorausgesetzt, dass in allen Fällen die gleichen Bilder verfügbar sind, was unter Umständen nicht gegeben ist. Dieser Lösungsansatz bietet daher nur eine stark eingeschränkte Flexibilität.

Die bekannten Lösungsansätze weisen jeweils einen oder mehrere der folgenden Nachteile auf:
- Die in der Screening-Befundung standardmäßig verwendeten Bildschirmaufteilungen in ein oder mehrere Teilfenster sind nicht schnell und komfortabel einstellbar.
- Zur Auswahl eines Teilfensters, in dem ein Bild angezeigt werden soll, muss die Maus zu dem jeweiligen Teilfenster bewegt werden, was wegen der Größe der Monitore lange Mauswege mit sich bringt.
- Die Auswahl eines Bildes zur Anzeige in einem Teilfenster erfordert zu viel Interaktionsaufwand.
- Der Benutzer hat keine schnelle Übersicht, welches Bild in einem bestimmten Fenster geöffnet ist, bzw. in welchem Fenster ein bestimmtes Bild geöffnet ist.
- Die Bilder können nicht beliebig auf die Anzeigefenster verteilt werden, statt dessen stehen nur bestimmte Konfigurationen zur Verfügung.
- Es wird vorausgesetzt, dass für jeden Fall der gleiche Satz an Bildern zur Verfiigung steht.

Aus "Qimage Pro V2.6 User Manual" 6. August 2001 (2001-08-06), DIGITAL DOMAIN INC., XP002301805 sec. "Getting Familiar with Qimage Pro" und RANDY GLASS: "Qimage Pro software review" FEATHER RIVER CANYON NEWS, [Online] 14. September 2000 (2000-09-14), XP002301804 Gefunden im Internet: URL:http://www.quiknet.com/-frcn/FramCont.html> [gefunden am 2004-10-21] sind weitere graphische Benutzeroberflächen für das sogenannte Digital Imaging bekannt geworden.

Der Erfindung liegt daher die Aufgabe zugrunde, ein verbessertes Verfahren zur Anzeige von Bildern, ein verbessertes Computerprogrammprodukt und ein verbessertes Anzeigesystem zu schaffen, welches einen oder mehrere der Nachteile des Standes der Technik behebt.

Die der Erfindung zugrundeliegende Aufgabe wird jeweils mit den Merkmalen der unabhängigen Patentansprüche gelöst. Bevorzugte Ausführungsformen der Erfindung sind in den abhängigen Patentansprüchen angegeben.

Die vorliegende Erfindung ermöglicht eine komfortable Auswahl von Bildern sowie die Auswahl des Teils eines Bildanzeigebereichs, in dem die betreffenden Bilder angezeigt werden sollen. Dies ist für sämtliche Anwendungen von Vorteil, bei denen verschiedene Bilder zur Auswahl angeboten werden und gleichzeitig verschiedene Aufteilungen eines Bildanzeigebereichs ausgewählt werden können.

Nach einer bevorzugten Ausführungsform der Erfindung wird die schnelle und flexible Zuordnung von radiologischen Bildern in Anzeigefenstern einer digitalen Screening-Befundungsstation ermöglicht. Von besonderem Vorteil ist hierbei, dass die verschiedenen Standardaufteilungen der Befundungsmonitore in ein, zwei oder vier Teilfenster sehr schnell und effizient und bei Bedarf auch für jeden Monitor unterschiedlich ausgewählt werden können.

Nach einer weiteren bevorzugten Ausführungsform der Erfindung bietet das Anzeigesystem eine Übersicht über die zur Verfügung stehenden Aufnahmen und lässt auf einen Blick erkennen, welches Bild in welchem Anzeigefenster gerade sichtbar ist.

Nach einer weiteren bevorzugten Ausführungsform der Erfindung weist das Anzeigesystem eine grafische Benutzerschnittstelle auf, die für den Einsatz in der Screening-Befundung zugeschnitten ist und die nur einen geringen Interaktions- und Zeitaufwand erfordert. Insbesondere bietet die Erfindung maximale Flexibilität bei der Anzeige der verfügbaren Aufnahmen in allen Standardaufteilungen der Befundungsmonitore.

Besonders vorteilhaft ist dabei ferner, dass nicht vorausgesetzt wird, dass für alle Fälle der gleiche Satz von Bildern vorliegt. Es können auch Ansichten angezeigt werden, die nur für einzelne Fälle vorliegen bzw. deren Anzeige nur im Einzelfall sinnvoll erscheint.

Im weiteren werden bevorzugte Ausführungsbeispiele der Erfindung mit Bezugnahme auf die Zeichnungen näher erläutert. Es zeigen:
- Figur 1: aus dem Stand der Technik bekannte typische Anordnungen von Bildern auf den Monitoren einer Befundungsstation,
- Figur 2: eine Ausführungsform eines erfindungsgemäßen Anzeigesystems,
- Figur 3: eine erste Darstellung eines Bildauswahlbereichs des Anzeigesystems der Figur 2,
- Figur 4: eine zweite Darstellung des Bildauswahlbereichs,
- Figur 5: eine Ausführungsform des erfindungsgemäßen Verfahrens zur Anzeige von Bildern.

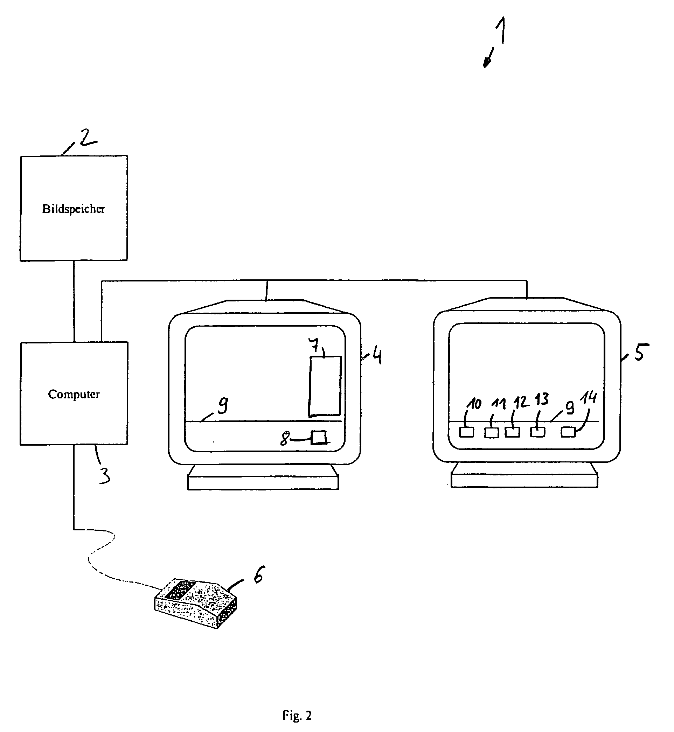

Die Figur 2 zeigt ein Anzeigesystem 1, wie z.B. eine Befundungsstation für medizinische Bilder, insbesondere digitale Mammogramme. Bei dem Anzeigesystem 1 kann es sich jedoch auch um ein Anzeigesystem für andere Arten von Bildern, beispielsweise für technische Dokumentations- oder Analysezwecke handeln.

Im weiteren wird jedoch ohne Beschränkung der Allgemeinheit davon ausgegangen, dass das Anzeigesystem 1 für medizinische Bilder und zwar insbesondere für digitale Mammogramme eingesetzt wird. Der Bildspeicher 2 des Anzeigesystems 1 beinhaltet mehrere Mengen von Bildern, wobei jede Menge einem bestimmten medizinischen Fall, d.h. einem bestimmten Patienten entspricht. Diese medizinischen Fälle werden mittels des Anzeigesystems 1 von einem Radiologen befundet.

Der Bildspeicher 2 ist an einen Computer 3 angeschlossen, der wiederum mit den beiden Monitoren 4 und 5 verbunden ist. Anstelle von zwei Monitoren können auch mehr als zwei oder auch nur ein Monitor angeschlossen sein.

An den Computer 3 ist eine Computermaus 6 angeschlossen. Über die Computermaus 6 und gegebenenfalls weitere Eingabegeräte, wie z.B. eine Tastatur oder eine Spracheingabe, gibt der Radiologe Kommandos an den Computer 3 zur Auswahl und Steuerung der Anzeige von Bildern des Bildspeichers 2 auf den Monitoren 4 und 5.

Auf dem Monitor 4 ist ein Bildauswahlbereich 7 in dessen Bildanzeigebereich eingeblendet. Die Einblendung des Bildauswahlbereichs 7 kann durch Selektion des Bedienelements 8 der grafischen Benutzerschnittstelle, z.B. durch Anklicken mit der Computermaus 6 beendet und reaktiviert werden. Alternativ kann dies auch über eine Steuerung z.B. mit der rechten Maustaste der Computermaus 6 oder über ein anderes angeschlossenes Eingabegerät, z.B. einer Tastatur, erfolgen.

Auf dem Monitor 4 und/oder 5 ist eine Werkzeugleiste 9 in dessen Bildanzeigebereich eingeblendet, die weitere Bedienelemente 10, 11, 12, 13 und 14 beinhaltet. Durch Betätigung des Bedienelements 10 wird die Werkzeugleiste 9 ausgeblendet bzw. wieder eingeblendet. Die Bedienelemente 11 bis 14 dienen zur Auswahl einer der vorkonfigurierten Standardanordnungen, wie z.B. "Übersichtsdarstellung", "aktuelle Untersuchung" und "CC Einzeldarstellung" (vgl. Figur 1) und/oder weiterer Anordnungen. Alternativ kann auch die Werkzeugleiste 9 über eine Steuerung z.B. mit der rechten Maustaste der Computermaus 6 oder über ein anderes angeschlossenes Eingabegerät, z.B. einer Tastatur, ein- und ausgeblendet werden.

Das Bildelement 14 dient zum Start einer Computer Assisted Diagnosis (CAD) Funktion. Weitere Bedienelemente können in der Werkzeugleiste 9 für weitere Funktionen angeordnet sein.

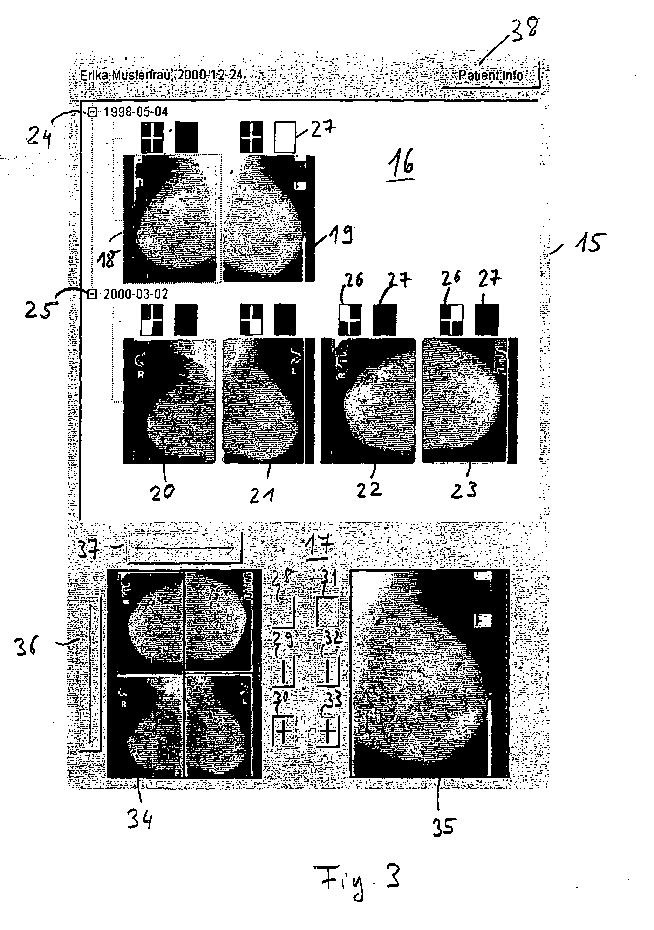

Die Figur 3 zeigt das Fenster 15 des Bildauswahlbereichs 7 der Figur 2. Für jede Untersuchung werden die vier Standardaufnahmen MLO R/L und CC R/L sowie ggfs. weitere vorliegende Aufnahmen bzw. weiterverarbeitete (z.B. kontrastverstärkte) Versionen der vorhandenen Aufnahmen dargestellt. Jedes Bild ist dabei durch eine auf Symbolgröße verkleinerte Ansicht seiner selbst repräsentiert (Thumbnails).

Die zu einer Untersuchung vorliegenden Bilder können durch Klick auf das Bedienelement 24 bzw. 25 mit dem Minuszeichen (-) ausgeblendet werden. Bei ausgeblendeten Untersuchungen wird anstelle des Minus- ein Pluszeichen (+) in dem Bedienelement 24 dargestellt. Durch Klick auf das Pluszeichen werden die Bilder einer Untersuchung wieder eingeblendet.

In dem betrachteten Beispiel der Figur 3 gehören die Bilder 18 und 19 zu der Untersuchung vom 4. Mai 1998 und die Bilder 20 bis 23 gehören zu der Untersuchung vom 2. März 2000. Durch Betätigung der Bedienelemente 24 bzw. 25 können also die zu dem jeweiligen Untersuchungsdatum gehörigen Bilder 18 und 19 bzw. 20 bis 23 ein- und ausgeblendet werden.

Bei den Bildern 18 bis 23 handelt es sich in der Darstellung in dem Bereich 16 um verkleinerte Repräsentationen dieser Bilder. Alternativ kann die Darstellung dieser Repräsentationen auch durch Darstellung eines die betreffende Aufnahme beschreibenden Symbols oder durch eine repräsentative Bezeichnung angezeigt werden.

Oberhalb jedes Bildes 18 bis 23 ist in dem Bereich 16 ein Symbol 26 und ein Symbol 27 angeordnet. Das Symbol 26 ist dem linken Monitor und das Symbol 27 ist dem rechten Monitor (vgl. Monitor 4 und Monitor 5 der Figur 2) zugeordnet. Die Symbole 26 und 27 geben jeweils an, ob und in welchem Teil eines Bildanzeigebereichs das dem Symbol zugeordnete Bild aktuell angezeigt wird. Eine schwarze Fläche in dem Symbol 26 bzw. 27 bedeutet dabei "keine Anzeige" und eine weiße Fläche bedeutet "Anzeige".

In dem Bereich 17 des Fensters 15 befinden sich Schaltflächen 28, 29 und 30 für den linken Monitor und Schaltflächen 31, 32 und 33 für den rechten Monitor. Die Schaltfläche 28 dient zur Auswahl einer Aufteilung des Bildanzeigebereichs des linken Monitors (vgl. Monitor 4 der Figur 2) für die Anzeige eines einzelnen Bildes, die Schaltfläche 29 für die Auswahl einer Aufteilung für die Anzeige von zwei Bildern und die Schaltfläche 30 für die Auswahl einer Aufteilung für die Darstellung von vier Bildern. Entsprechendes gilt für die Schaltflächen 31, 32 und 33, die dem rechten Monitor - vgl. Monitor 5 der Figur 2 - zugeordnet sind.

Die Bildanzeigebereiche des linken bzw. des rechten Monitors werden in dem Bereich 17 des Fensters 15 durch die beiden Rechtecke 34 und 35 symbolisiert, wobei das Rechteck 34 dem linken Monitor (vgl. Monitor 4 der Figur 2) und das Rechteck (35) dem rechten Monitor (vgl. Monitor 5 der Figur 2) zugeordnet ist.

Die drei möglichen Aufteilungen jedes Monitors in ein, zwei oder vier Teilfenster können durch die entsprechende Schaltflächen (innen zwischen den Rechtecken 34 und 35) für beide Monitore unabhängig voneinander aktiviert werden. Durch die Auswahl einer Aufteilung für einen Monitor wird die symbolische Monitordarstellung entsprechend unterteilt bzw. die Unterteilung aufgehoben. Gleichzeitig wird auch die Aufteilung des zugehörigen Befundungsmonitors entsprechend geändert.

Um ein bestimmtes Bild des betrachteten medizinischen Falls auf einem Bildanzeigebereich eines der beiden Monitore anzuzeigen, wählt der Benutzer zunächst die gewünschte Monitoraufteilung durch "Anklicken" einer der Schaltflächen 28, 29 oder 30 für den linken Monitor oder einer der Schaltflächen 31, 32 oder 33 für den rechten Monitor. Anschließend klickt der Benutzer mit der Computermaus auf die Repräsentation des gewünschten Bildes in dem Bereich 16 und "zieht" die Repräsentation mit der gedrückten Maustaste auf denjenigen Bereich des Rechtecks 34 oder 35, der dem gewünschten Teil des Bildanzeigebereichs für die Anzeige des Bildes entspricht. Bei den Repräsentationen spricht man auch von sogenannten Thumbnails.

Vorzugsweise wird nach einer Betätigung einer der Schaltflächen 28 bis 33 eine entsprechende Repräsentation der gewählten Aufteilung des Bildanzeigebereichs in dem betreffenden Rechteck 34 oder 35 angezeigt. Wenn beispielsweise die Schaltfläche 28 oder 29 selektiert wurde, so erscheint das Rechteck 34 bzw. das Rechteck 35 ohne weitere Unterteilung. Wenn dagegen die Schaltfläche 29 oder 32 selektiert wurde, so wird das Rechteck 34 bzw. das Rechteck 35 in der Mitte durch eine vertikal verlaufende Linie in zwei Hälften geteilt. Wenn schließlich die Schaltfläche 30 oder 33 selektiert wurde, so wird das Rechteck 34 bzw. das Rechteck 35 durch zwei sich kreuzende horizontale und vertikale Linien in vier Teilbereiche aufgeteilt, die den jeweils vier Teilbereichen des Bildanzeigebereichs der Monitore entsprechen.

Wenn der Benutzer beispielsweise die Schaltfläche 30 selektiert hat, so wird eine entsprechende Vierteilung des Rechtecks 34 als Repräsentation der entsprechenden Aufteilung des Bildanzeigebereichs angezeigt. Dieser Fall ist in dem Beispiel der Figur 3 gezeigt.

Der Benutzer selektiert dann eines der Bilder 18 bis 23 des Bereichs 16, z.B. das Bild 22. Die Selektion des Bildes 22 kann z.B. durch Anklicken mit der Computermaus 6 (vgl. Figur 2) erfolgen. Der Benutzer "zieht" dann das Bild 22 auf den linken oberen Quadranten in dem Rechteck 34, da der Benutzer das Bild 22 in dem linken oberen Quadranten des linken Monitors angezeigt haben möchte.

Sobald sich das Bild 22 über dem linken oberen Quadranten des Rechtecks 34 befindet, lässt der Benutzer die Maustaste los, so dass die gewünschte Zuordnung des Bildes 22 zu diesem Teil des Bildanzeigebereichs erfolgt. Unmittelbar danach wird das Bild 22 in dem linken oberen Quadranten des Bildanzeigebereichs des Monitors 4 (vgl. Figur 2) angezeigt.

Ferner wird auch der linke obere Quadrant in dem Symbol 26 weiß gekennzeichnet, um die Anzeige dieses Bildes 22 in dem linken oberen Quadranten des linken Bildschirms zu symbolisieren.

Entsprechend können ein oder mehrere weitere Bilder des Bereichs 16 per Drag-and-Drop den Rechtecken 34 und 35 bzw. bestimmten Bereichen der betreffenden Aufteilungen zugeordnet werden. In dem gezeigten Beispiel hat der Benutzer das Bild 23 per Drag-and-Drop auf den rechten oberen Quadranten des Rechtecks 34 zugeordnet, das Bild 20 dem linken unteren Quadranten und das Bild 21 dem rechten unteren Quadranten des Rechtecks 34.

Ferner hat der Benutzer die Einzelbilddarstellung durch Selektion der Schaltfläche 31 für den rechten Monitor ausgewählt. Der Benutzer hat dann das Bild 19 per Drag-and-Drop auf das Rechteck 35 bewegt. Die entsprechende Zuordnung ist in dem Symbol 27 des Bildes 19 durch die weiße Fläche in dem Symbol 27 angezeigt.

Die symbolischen Monitore des Bereichs 17 spiegeln also in Form der Rechtecke 34 und 35 stets die Aufteilung und Belegung der Befundungsmonitore wieder. Ebenso geben auch die Symbole 26 und 27 jeweils schnell einen Überblick darüber, welche der Bilder in dem Bereich 16 überhaupt in einem Bildanzeigebereich dargestellt werden und wenn ja, in welcher Aufteilung und in welchem Bereich der Aufteilung. Die Symbole 26 und 27 entsprechen dabei immer der durch Selektion einer der Schaltflächen 28, 29 oder 30 bzw. 31, 32 oder 33 gewählten Aufteilung. Wenn die Auswahl einer Aufteilung durch Anklicken einer Schaltfläche geändert wird, so ändert sich auch die entsprechenden Symbole 26 oder 27.

Beim Hin- und Herwechseln zwischen den einzelnen Aufteilungen für einen Monitor bleiben die für die jeweiligen Aufteilungen gewählten Bildbelegungen erhalten. Der Benutzer kann also z.B. für einen Monitor zunächst die Einzelansicht auswählen, ein Bild mit Drag-and-Drop zur Ansicht auswählen, anschließend in die Viereransicht wechseln und vier weitere Bilder zur Ansicht in dieser Aufteilung auswählen und nun zwischen der Einer- und der Viereransicht beliebig hin- und herwechseln. Der Computer speichert die Zuordnungen der für eine Aufteilung ausgewählten Bilder so lange, bis die Belegung durch den Benutzer geändert wird.

Wenn für einen Monitor eine Aufteilung in zwei oder vier Teilfenster eingestellt ist, erscheint über bzw. neben dem Monitor-Rechteck 34 bzw. 35 im Bereich 17 eine Schaltfläche 36 bzw. 37 mit einem zweiseitigen vertikalen bzw. horizontalen Pfeil. Durch einen "Klick" auf die Schaltfläche 37 werden die Bilder links und rechts vertauscht; durch einen Klick auf die Schaltfläche 36 werden die oberen und die unteren Bilder vertauscht (nur bei vier Teilfenstern).

Klickt der Benutzer mit der Computermaus 6 (vgl. Figur 2) auf die Schaltfläche 37, so führt dies bei dem Beispiel der Figur 3 dazu, dass die linken und die rechten Bilder, d.h. die Bilder 22 und 23 sowie die Bilder 20 und 21 miteinander vertauscht werden, d.h. das Bild 22 wird dann in dem rechten oberen Quadranten und das Bild 20 in dem rechten unteren Quadranten des Rechtecks 34 dargestellt. Entsprechend wird das Bild 23 in dem linken oberen Quadranten und das Bild 21 in dem linken unteren Quadranten des Rechtecks 34 dargestellt.

Auf entsprechende Art und Weise werden durch Anklicken der Schaltfläche 36 die oberen Bilder 22 und 23 mit den unteren Bildern 20 und 21 vertauscht.

Ein Bild kann von einem Teilfenster in ein anderes verschoben werden, indem der Benutzer das "Thumbnail" in dem Bereich 17 per Drag-and-Drop von einem Teilfenster in ein anderes zieht. Durch einen Doppelklick auf ein Thumbnail im Bereich 17 verschwindet das betreffende Bild aus dem Teilfenster und auch von dem Bildanzeigbereich des Monitors und das Teilfenster ist anschließend leer.

Ein Bild, das in einem Teilfenster einer Zweier- oder Viereraufteilung angezeigt wird, kann auf den ganzen Bildschirm zu einer Einzelbilddarstellung vergrößert werden. Hierzu markiert der Benutzer das betreffende Thumbnail in einem der Rechtecke 34 oder 35 - beispielsweise durch Anklicken mit der Maus - wobei das Thumbnail dann durch eine Umrahmung hervorgehoben wird. Anschließend klickt der Benutzer auf die Schaltfläche 28 bzw. 31 für die Einzelaufteilung des entsprechenden Monitors. Die vorherige Aufteilung dieses Monitors wird dann aufgehoben und das markierte Bild wird in voller Monitorgröße dargestellt. Die verkleinerte Bilddarstellung in den Rechtecken 34 und 35 entspricht dabei jeweils der auf den Monitoren gezeigten Darstellung.

Der Benutzer hat also beispielsweise die Möglichkeit, das Thumbnail des linken oberen Quadranten des Rechtecks 34, welches das Bild 22 darstellt, per Drag-and-Drop auf einen anderen Quadranten in dem Rechteck 34 oder auch auf das Rechteck 35 zu bewegen und dort durch Loslassen der Maustaste "fallen zu lassen". Bewegt der Benutzer also beispielsweise den Thumbnail des oberen linken Quadranten des Rechtecks 34, welcher dem Bild 22 entspricht, auf das Rechteck 35, so wird das Bild 22 danach auf dem rechten Monitor in Einzelbilddarstellung gezeigt. Der linke obere Quadrant des Rechtecks 34 ist dann leer.

Entsprechend werden auch die Symbole 26 und 27 des Bildes 22 verändert: Sämtliche Quadranten des Symbols 26 werden schwarz dargestellt, da das Bild 22 in keinem dieser Quadranten des linken Monitors angezeigt wird. Dagegen verändert sich die Füllfarbe des Symbols 27 von schwarz auf weiß, um anzuzeigen, dass das Bild 22 auf dem rechten Monitor als Einzelbild dargestellt wird.

Der Benutzer hat ferner die Möglichkeit, eines der Thumbnails in den Rechtecken 34 und 35 durch einen Doppelklick mit der Computermaus auszublenden. Geht der Benutzer mit der Computermaus beispielsweise auf den Thumbnail des Rechtecks 35, welches das Bild 19 repräsentiert, und macht dann einen Doppelklick, so verschwindet die Anzeige des Thumbnails aus dem Rechteck 35 und das Rechteck 35 ist leer. Entsprechend ändert sich dann auch die Füllfarbe des Symbols 27 des Bilds 19 von weiß auf schwarz und das Bild verschwindet auch vom rechten Monitor.

Der Benutzer hat ferner die Möglichkeit, ein Bild, das aktuell in einer Mehrbilddarstellung auf einem der Monitore gezeigt wird, für die Einzelbilddarstellung auszuwählen. Wenn der Benutzer beispielsweise das Bild 21 in einer Einzelbilddarstellung auf einem der Monitore angezeigt haben möchte, so geht er wie folgt vor:
Zunächst wird das dem Bild 21 entsprechende Thumbnail in dem rechten unteren Quadranten des Rechtecks 34 durch einen Klick mit der Maus selektiert. Diese Selektion des Thumbnails in dem rechten unteren Quadranten des Rechtecks 34 wird durch eine besondere Umrahmung dieses Thumbnails angezeigt.

Der Benutzer klickt dann auf die Schaltfläche 28, um die Einzelbilddarstellung für den linken Monitor auszuwählen. Das zuvor markierte Bild 21 wird dann als Einzelbild in voller Größe auf dem linken Monitor angezeigt. Die vorherige Zuordnung der Thumbnails zu den Quadranten des Rechtecks 34 in der Viereransicht bleibt dabei gespeichert.

Wenn der Benutzer von der Einzelbilddarstellung zu der Viereransicht zurückkehren möchte, kann er dies durch Betätigung von lediglich der Schaltfläche 30 erreichen. Die ursprüngliche Zuordnung der Thumbnails zu den Quadranten des Rechtecks 34 wird dann wieder abgerufen und in dem Rechteck 34 sowie auf dem linken Monitor angezeigt. Von dort aus kann der Benutzer auch wieder zur Einzelbilddarstellung des Bildes 21 zurückkehren, indem er die Schaltfläche 28 erneut betätigt.

Das Fenster 15 hat in einem oberen Bereich eine Schaltfläche 38, mit der sich Informationen über den Patienten des betrachteten medizinischen Falls abrufen lassen.

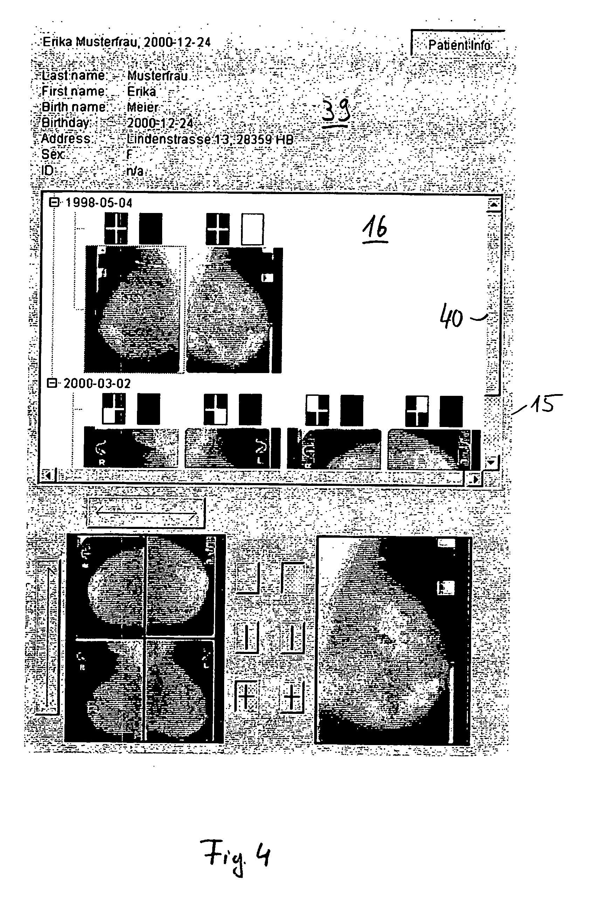

Die Figur 4 zeigt das Fenster 15, nachdem der Benutzer die Schaltfläche 38 betätigt hat. In dem Bereich 39 des Fensters 15 werden dann Patienteninformationen, wie Familienname, Vorname, Geburtsname, Geburtsdatum, Adresse, Geschlecht sowie eine Identifikationsnummer angezeigt. Gleichzeitig wird der Bereich 16 des Fensters 15 verkleinert und eine Leiste 40 wird eingeblendet, um dennoch sämtliche Bilder 18 bis 23 des Bereichs 16 betrachten und auswählen zu können.

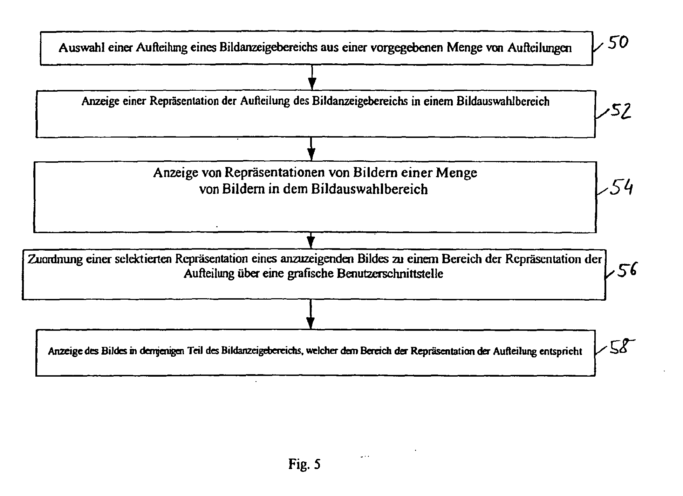

Die Figur 5 zeigt ein Flussdiagramm einer bevorzugten Ausführungsform des erfindungsgemäßen Verfahrens. In dem Schritt 50 wird zunächst die Aufteilung des Bildanzeigebereichs auf einem Monitor aus einer vorgegebenen Menge von Aufteilungen ausgewählt. Ist mehr als ein Bildanzeigebereich auf demselben Monitor oder auf einem oder mehreren weiteren Monitoren vorhanden, so wird eine Aufteilung für jeden der Bildanzeigebereiche ausgewählt.

In dem Ausführungsbeispiel der Figur 3 erfolgt dies für die durch die Rechtecke 34 und 35 repräsentierten Bildanzeigebereiche der Monitore 4 und 5 (vgl. Figur 2) durch Betätigung einer der Schaltflächen 28, 29 oder 30 bzw. 31, 32 oder 33.

In dem Schritt 52 wird dann eine Repräsentation der gewählten Aufteilung des Bildanzeigebereichs in einem Bildauswahlbereich angezeigt. Bei mehreren gewählten Aufteilungen für verschiedene Bildanzeigebereiche werden entsprechend ebenfalls die weiteren Repräsentationen dieser Aufteilungen in dem Bildauswahlbereich angezeigt.

In der Ausführungsform der Figur 3 erfolgt dies, indem für die Viereransicht, d.h. nach der Selektion der Schaltfläche 30 für das Rechteck 34, zwei sich kreuzende horizontale und vertikale Linien in dem Rechteck 34 gezeigt werden, um die Aufteilung des betreffenden Bildanzeigebereichs des linken Monitors zu symbolisieren. Bei einer Betätigung der Schaltfläche 29 für die Zweieransicht wird lediglich eine vertikale Linie in das Rechteck 34 eingeblendet, um dieses entsprechend der Zweieransicht senkrecht zu halbieren. Bei Selektion der Schaltfläche 28 hingegen werden keine weiteren Linien in dem Rechteck 34 gezeigt, was der Anzeige einer Repräsentation der Aufteilung für ein Einzelbild entspricht. Entsprechendes trifft für die Schaltflächen 31 bis 33 des Rechtecks 35 zu. Alternativ oder zusätzlich erfolgt die Anzeige der Repräsentationen der Aufteilungen durch eine graphische Hervorhebung des oder der Schältflächen, die für die Auswahl der Aufteilung betätigt worden sind. In dem Ausführungsbeispiel der Fig. 3 erfolgt dies durch eine Darstellung der betreffenden Schaltflächen 30 und 31, die den räumlichen Eindruck eines eingedrückten Knopfes vermittelt.

In dem Schritt 54 werden Repräsentationen von Bildern einer Menge von Bildern in dem Bildauswahlbereich angezeigt. Bei der Menge von Bildern handelt es sich beispielsweise um diejenigen Bilder, die zu einem bestimmten medizinischen Fall gehören. Diese Bilder werden durch deren Repräsentationen in dem Bildauswahlbereich angezeigt. Bei den Repräsentationen kann es sich beispielsweise um verkleinerte Darstellungen der Bilder, sogenannte Thumbnails, handeln oder um eine andere symbolische Darstellung oder eine repräsentative Bezeichnung. In der Ausführungsform der Figur 3 stellen die Bilder 18 bis 23 diese Repräsentationen der medizinischen Bilder des betrachteten Falls dar. Die Darstellung dieser Bilder wird durch Betätigung der Bedienelemente 24 bzw. 25 ein- und ausgeblendet.

In dem Schritt 56 wird eine Repräsentation eines Bildes selektiert und beispielsweise durch Drag-and-Drop einem Bereich in der Repräsentation einer der Aufteilungen zugeordnet. In dem Ausführungsbeispiel der Figur 3 erfolgt dies beispielsweise, indem eines der Bilder 18 bis 23 durch Anklicken mit der Maus selektiert wird und dann mit der Maus auf einen Bereich der Rechtecke 34 oder 35 bewegt wird. Sobald sich die selektierte Repräsentation des anzuzeigenden Bildes oberhalb des gewünschten Teilanzeigebereichs in dem Rechteck 34 bzw. 35 befinden, lässt der Benutzer die Computermaus los, um die Repräsentation dort "fallen zu lassen" und um so eine Zuordnung herzustellen.

In dem Ausführungsbeispiel der Figur 3 kann dies beispielsweise so erfolgen, dass der Benutzer eine Repräsentation eines anzuzeigenden Bildes, zum Beispiel das Bild 22, anklickt und dann mit der Computermaus auf den linken oberen Quadranten der in dem Rechteck 34 angezeigten Repräsentation der Aufteilung einer Viereransicht zieht und dort fallen lässt. Dadurch wird die Zuordnung der selektierten Repräsentation, d.h. des Bildes 22, zu dem linken oberen Quadranten der Viereransicht auf dem linken Monitor hergestellt.

In dem Schritt 58 erfolgt dann die Anzeige des betreffenden Bildes, d.h. in dem betrachteten Beispielfall die Anzeige des Bildes 22 in dem linken oberen Quadranten des linken Monitors. Danach können ein oder mehrere weitere Repräsentationen von Bildern per Drag-and-Drop verschiedenen Bereichen der Aufteilungen des linken und des rechten Monitors zugeordnet werden, so dass beispielsweise die Zuordnungen des Ausführungsbeispiels der Figur 3 resultieren.

### Bezugszeichenliste

- 1: Anzeigesystem
- 2: Bildspeicher
- 3: Computer
- 4: Monitor
- 5: Monitor
- 6: Computer Maus
- 7: Bildauswahlbereich
- 8: Bedienelement
- 9: Werkzeugliste
- 10: Bedienelement
- 11: Bedienelement
- 12: Bedienelement
- 13: Bedienelement
- 14: Bedienelement
- 15: Fenster
- 16: Bereich
- 17: Bereich
- 18: Bild
- 19: Bild
- 20: Bild
- 21: Bild
- 22: Bild
- 23: Bild
- 24: Bedienelement
- 25: Bedienelement
- 26: Symbol
- 27: Symbol
- 28: Symbol
- 29: Schaltfläche
- 30: Schaltfläche
- 31: Schaltfläche
- 32: Schaltfläche
- 33: Schaltfläche
- 34: Rechteck
- 35: Rechteck
- 36: Schaltfläche
- 37: Schaltfläche
- 38: Schaltfläche
- 39: Bereich
- 40: Leiste

## Patentansprüche

1. Verfahren zur Anzeige von medizinischen Bildern mit folgenden Schritten:
- Auswahl einer Aufteilung eines Bildanzeigebereichs aus einer vorgegebenen Menge von Aufteilungen und Anzeige einer Repräsentation der Aufteilung des Bildanzeigebereichs in einem Bildauswahlbereich,
- Anzeige von Repräsentationen von Bildern einer Menge von Bildern in dem Bildauswahlbereich,
- Zuordnung einer selektierten Repräsentation eines anzuzeigenden Bildes zu einem Bereich der Repräsentation der Aufteilung über eine grafische Benutzerschnittstelle,
- Anzeige des Bildes in demjenigen Teil des Bildanzeigebereichs, welcher dem Bereich der Repräsentation der Aufteilung entspricht,
wobei in dem Bildauswahlbereich jeder Repräsentation eines Bildes ein Symbol zugeordnet ist, welches angibt, ob und an welcher Position das betreffende Bild in einem Teil des Bildanzeigebereichs angezeigt wird.

2. Verfahren nach Anspruch 1, wobei die Zuordnung der selektierten Repräsentation mittels drag-and-drop erfolgt.

3. Verfahren nach Anspruch 1 oder 2, wobei die vorgegebene Menge von Aufteilungen die Aufteilung des Bildanzeigebereichs für ein, zwei oder vier Bilder pro Anzeigevorrichtung beinhaltet.

4. Verfahren nach Anspruch 1, 2 oder 3, wobei der Menge von Aufteilungen eine Menge von ersten Bedienelementen zugeordnet ist, so dass die Auswahl einer Aufteilung durch Selektion eines entsprechenden ersten Bedienelements über die grafische Benutzerschnittstelle erfolgt, und wobei die ersten Bedienelemente vorzugsweise in dem Bildauswahlbereich angeordnet sind.

5. Verfahren nach einem der vorhergehenden Ansprüche 1 bis 4, wobei die Repräsentation der Menge von Bildern durch die Anzeige einer repräsentativen Bezeichnung für jedes Bild oder durch die Anzeige einer verkleinerten und/oder symbolischen Darstellung für jedes Bild erfolgt.

6. Verfahren nach einem der vorhergehenden Ansprüche 1 bis 5, wobei die Repräsentationen der Bilder nach dem Erstellungsdatum sortiert sind, und die Repräsentationen von Bildern desselben Erstellungsdatums durch Betätigung eines zweien Bedienelements der grafischen Benutzerschnittstelle ein- oder ausgeblendet werden können.

7. Verfahren nach einem der vorhergehenden Ansprüche 1 bis 6 mit folgenden weiteren Schritten:
- Speicherung der Zuordnung eines oder mehrer Bilder zu der Repräsentation einer ersten Aufteilung,
- Auswahl einer zweiten Aufteilung,
- Wiederauswahl der ersten Aufteilung,
- Abrufen der gespeicherten Zuordnung des oder der Bilder zu der Repräsentation der ersten Aufteilung und entsprechende Anzeige des oder der Bilder.

8. Verfahren nach einem der vorhergehenden Ansprüche 1 bis 7, wobei eine Zuordnung eines Bildes zu einem Bereich der Repräsentation der Aufteilung durch Drag-and-Drop einer selektierten Repräsentation des betreffenden Bildes von dem ursprünglichen Bereich der Repräsentation der Aufteilung zu dem gewünschten Bereich der Repräsentation der Aufteilung verändert wird.

9. Verfahren nach einem der vorhergehenden Ansprüche 1 bis 8 mit folgenden weiteren Schritten:
- Markierung einer Repräsentation eines Bildes in der Repräsentation der Aufteilung für zwei oder mehr Bilder,
- Auswahl einer Aufteilung für ein Bild,
- Einzelbilddarstellung des der markierten Repräsentation entsprechenden Bildes.

10. Computerprogrammprodukt zur Generierung einer grafischen Benutzeroberfläche zur Durchführung eines Verfahrens nach einem der vorhergehenden Ansprüche 1 bis 9.

11. Anzeigesystem zur Darstellung von medizinischen Bildern mit
- Mitteln (28, 29, 30, 31, 32, 33) zur Auswahl einer Aufteilung eines Bildanzeigebereichs aus einer vorgegebenen Menge von Aufteilungen,
- Mitteln (2, 16, 24, 25) zur Anzeige von Repräsentationen (18, 19, 20, 21, 22, 23) von Bildern einer Menge von Bildern in einem Bildauswahlbereich (7, 15, 16),
- Mittel (3, 6) einer grafischen Benutzerschnittstelle zur Zuordnung einer selektierten Repräsentation eines anzuzeigenden Bildes zu einem Bereich (34, 35) einer Repräsentation der Aufteilung,
- Mitteln (3, 4, 5) zur Anzeige von Bildern in denjenigen Teilen des Bildanzeigebereichs, welche der jeweiligen Zuordnung entsprechen,
wobei in dem Bildauswahlbereich jeder Repräsentation eines Bildes ein Symbol zugeordnet ist, welches angibt, ob und an welcher Position das betreffende Bild in einem Teil des Bildanzeigebereichs angezeigt wird.

12. Anzeigesystem nach Anspruch 11 mit Mitteln (28, 29, 30, 31, 32, 33, 34, 35) zur Anzeige einer Repräsentation der Aufteilung des Bildanzeigebereichs in einem Bildauswahlbereich (7, 15, 17), wobei die Mittel der grafischen Benutzerschnittstelle als Drag-and-Dropmittel ausgebildet sind.

13. Anzeigesystem nach einem der vorhergehenden Ansprüche 11 oder 12, wobei die Mittel zur Auswahl einer Aufteilung eine Menge von ersten Bedienelementen (28, 29, 30, 31, 32, 33) aufweisen, wobei jedes erste Bedienelement einer Aufteilung eindeutig zugeordnet ist, und wobei die ersten Bedienelemente vorzugsweise in dem Bildauswahlbereich angeordnet sind.

14. Anzeigesystem nach einem der vorhergehenden Ansprüche 11 bis 13, wobei die Mittel zur Anzeige von Repräsentationen von Bildern Mittel zur Anzeige einer repräsentativen Bezeichnung für jedes Bild und/oder Mittel zur Anzeige einer verkleinerten und/oder symbolischen Darstellung für jedes Bild aufweisen.

15. Anzeigesystem nach einem der vorhergehenden Ansprüche 11 bis 14 mit Mitteln zur Speicherung der Zuordnung eines oder mehrerer Bilder zu der Repräsentation einer Aufteilung und mit Mitteln zum Abrufen der gespeicherten Zuordnung des oder der Bilder zu der Repräsentation der Aufteilung für die Anzeige des oder der Bilder, nachdem die Aufteilung wieder ausgewählt worden ist.

16. Anzeigesystem nach einem der vorhergehenden Ansprüche 11 bis 15 mit Mitteln zur Markierung einer Repräsentation eines Bildes in der Repräsentation der Aufteilung für zwei oder mehr Bilder, so dass nach der Auswahl einer Aufteilung für ein Bild das der markierten Repräsentation entsprechende Bild in einer Einzelbilddarstellung angezeigt wird.

## Claims

1. Method for display of medical images comprising the following steps:
- selection of a partitioning of an image display area from a predefined set of partitionings and display of a representation of the partitioning of the image display area in an image selection area,
- display of representations of images of a set of images in the image selection area,
- assignment of a selected representation of an image to be displayed to an area of the representation of the partitioning via a graphical user interface, and
- display of the image in a part of the image display area that corresponds to the area of the representation of the partitioning, wherein each representation of an image is assigned a symbol in the image selection area that indicates if and in which position in a part of the image display area said image is to be displayed.

2. The method according to claim 1, comprising the further step of effecting the assignment of the selected representation by using drag-and-drop.

3. The method according to claim 1 or 2, whereby the predefined set of partitionings comprises the further step of effecting partitionings of the image display area for one, two or four images per display device.

4. The method of claim 1, 2 or 3, comprising the further step of assigning the set of partitions a set of first buttons, so that the selection of a partitioning occurs by selection of a corresponding first button of the graphical user interface, and whereby the first button is preferably arranged in the image selection area.

5. The method according to any one of the preceding claims 1 to 4, comprising effecting the representation of the set of images by the display of a representative identifier for each image or by the display of a scaled down and/or symbolic display for each image.

6. The method according to any one of the preceding claims 1 to 5 further comprising sorting the representation of the image by the creation date, and causing the representation of images with the same creation date to fade-in or fade out by the operation of a second button of the graphical user interface.

7. The method according to any one of the preceding claims 1 to 6, comprising the further steps of
- storing the assignment of one or more images to the representation of a first partition,
- selecting a second partition,
- reselecting the first partition, and
- retrieving the stored assignment of the one or more images to the representation of the first partitioning and corresponding display of the one or more images.

8. The method according to any one of the preceding claims 1 to 7, further comprising changing an association of an image to an area of the representation of the partitioning by drag-and-drop of a selected representation of said image from the original area of the representation of the partitioning to the desired area of the representation of the partition.

9. The method according to any one of the claims 1 to 8 comprising the further steps of:
- marking a representation of an image in the representation of the partitioning for two or more images,
- selecting a partitioning for an image, and
- representing a single image display of the image corresponding to the marked representation.

10. A computer program product for the generation of a graphical user interface for the execution of a method according to any one of the claims 1 to 9.

11. Display system for the display of medical images comprising means (28; 29; 30; 31; 32; 33) for the selection of a partitioning of an image display area from a predetermined set of partitionings, display means (2; 16; 24; 25) for the display of representations (18; 19; 20; 21; 22; 23) of images of a set of images in an image selection area (7; 15; 16), a graphical user interface means (3; 6) for the assignment of a selected representation of an image to be displayed to an area (34; 35) of a representation of the partitioning, and a means (3; 4; 5) for the display of images in a part if the image display area that correspond to the assignment, wherein each representation of an image is assigned a symbol in the image selection area that indicates if and in which position in a part of the image display area said image is to be displayed.

12. The display system according to claim 11 comprising means (28; 29; 30; 31; 32; 33; 34; 35) for the display of a representation of the partitioning of an image display area in an image selection area (7; 15; 17) whereby the graphical user interface comprise drag-and-drop means.

13. The display system according to claim 11 or 12, whereby the means for the selection of a partitioning has a set of first buttons (28; 29; 30; 31; 32; 33), whereby each first button is uniquely assigned to a partition, and whereby the first buttons are arranged in the image selection window.

14. The display system according to any one of the claims 11 to 13, wherein the means for display of the representations of images has one of means for the display of a representative indication for each image and means for the display of one of a scaled down and symbolic display for each image.

15. The display system according to any one of the preceding claims 11 to 14 further comprising means for storage of the assignments of one or more images to the representations of a partitioning and with means for the retrieval of the stored assignment of the one or more images to the representation of the partitioning for the display of the one or more images after the partitioning is reselected.

16. The display system according to any one of the preceding claims 11 to 15 further comprising means for the marking of a representation of an image in the representation of the partitioning for a plurality of images, so that the image corresponding to the marked representation is displayed in a single image display after the selection of a partitioning for one image.

## Revendications

1. Procédé pour la visualisation d'images médicales, comprenant les étapes suivantes consistant à :
- sélectionner une répartition d'une plage de visualisation d'images à partir d'une quantité prédéfinie de répartitions et visualiser une représentation de la répartition de la plage de visualisation d'images dans une plage de sélection d'images ;
- visualiser des représentations d'images d'une quantité d'images dans la plage de sélection d'images ;
- attribuer à une représentation sélectionnée d'une image à visualiser une plage de la représentation de la répartition via une interface utilisateur de type graphique ;
- visualiser l'image dans la partie de la plage de visualisation d'images qui correspond à la plage de la représentation de la répartition ;
dans lequel, dans la plage de sélection d'images, à chaque représentation d'une image, est attribué un symbole qui indique le fait de savoir si l'image correspondante est visualisée dans une partie de la plage de visualisation d'images et à quel endroit.

2. Procédé selon la revendication 1, dans lequel l'attribution à la représentation sélectionnée a lieu par glisser-déposer.

3. Procédé selon la revendication 1 ou 2, dans lequel la quantité prédéfinie de répartitions comprend la répartition de la plage de visualisation d'images pour une, deux ou quatre images par dispositif de visualisation.

4. Procédé selon la revendication 1, 2 ou 3, dans lequel, à la quantité de répartitions, est attribuée une quantité de premiers éléments de réglage, de telle sorte que la sélection d'une répartition a lieu par sélection d'un premier élément de réglage correspondant via l'interface utilisateur de type graphique, et dans lequel les premiers éléments de réglage sont disposés de préférence dans la plage de sélection d'images.

5. Procédé selon l'une quelconque des revendications précédentes 1 à 4, dans lequel la représentation de la quantité d'images a lieu via la visualisation d'une désignation représentative pour chaque image ou via la visualisation d'une représentation réduite et/ou symbolique pour chaque image.

6. Procédé selon l'une quelconque des revendications précédentes 1 à 5, dans lequel les représentations des images sont triées en fonction de la date d'élaboration, et les représentations d'images possédant la même date d'élaboration peuvent être masquées ou supprimées à l'intervention d'un deuxième élément de réglage de l'interface utilisateur de type graphique.

7. Procédé selon l'une quelconque des revendications 1 à 6, comportant les étapes supplémentaires suivantes consistant à :
- mémoriser l'attribution d'une ou de plusieurs images à la représentation d'une première répartition ;
- sélectionner une deuxième répartition ;
- sélectionner une nouvelle fois la première répartition ;
- rappeler l'attribution mémorisée de l'image ou des images à la représentation de la première répartition et visualiser l'image ou les images de manière correspondante.

8. Procédé selon l'une quelconque des revendications précédentes 1 à 7, dans lequel une attribution d'une image à une plage de la représentation de la répartition est soumise à une modification par glisser-déposer d'une représentation sélectionnée de l'image correspondante, depuis la plage initiale de la représentation de la répartition jusqu'à la plage désirée de la représentation de la répartition.

9. Procédé selon l'une quelconque des revendications 1 à 8, comportant les étapes supplémentaires suivantes consistant à :
- marquer une représentation d'une image dans la représentation de la répartition pour deux images ou plus ;
- sélectionner une répartition pour une image ;
- représenter image par image l'image correspondant à la représentation marquée.

10. Produit de programme informatique pour la génération d'une interface utilisateur de type graphique pour la mise en oeuvre d'un procédé selon l'une quelconque des revendications précédentes 1 à 9.

11. Système de visualisation pour la représentation d'images médicales, comprenant :
- des moyens (28, 29, 30, 31, 32, 33) pour la sélection d'une répartition d'une plage de visualisation d'images à partir d'une quantité prédéfinie de répartitions ;
- des moyens (2, 16, 24, 25) pour la visualisation de représentations (18, 19, 20, 21, 22, 23) d'images d'une quantité d'images dans une plage de sélection d'images (7, 15, 16) ;
- des moyens (3, 6) d'une interface utilisateur de type graphique pour l'attribution d'une représentation sélectionnée d'une image à visualiser à une plage (34, 35) d'une représentation de la répartition ;
- des moyens (3, 4, 5) pour la visualisation d'images dans les parties de la plage de visualisation d'images, qui correspondent à l'attribution respective ;
dans lequel, dans la plage de sélection d'images un symbole est attribué à chaque représentation d'une image, qui indique le fait de savoir si l'image correspondante est visualisée dans une partie de la plage de visualisation d'images et à quel endroit.

12. Système de visualisation selon la revendication 11, comprenant des moyens (28, 29, 30, 31, 32, 33, 34, 35) pour la visualisation d'une représentation de la répartition de la plage de visualisation d'images dans une plage de sélection d'images (7, 15, 17), les moyens de l'interface utilisateur de type graphique étant réalisés sous la forme de moyens glisser-déposer.

13. Système de visualisation selon l'une quelconque des revendications précédentes 11 ou 12, dans lequel les moyens pour la sélection d'une répartition présentent une quantité de premiers éléments de réglage (28, 29, 30, 31, 32, 33), chaque premier élément de réglage étant attribué de manière univoque à une répartition et les premiers éléments de réglage étant de préférence disposés dans la plage de sélection d'images.

14. Système de visualisation selon l'une quelconque des revendications précédentes 11 à 13, dans lequel les moyens pour la visualisation de représentations d'images présentent des moyens pour la visualisation d'une désignation représentative pour chaque image et/ou des moyens pour la visualisation d'une représentation réduite et/ou symbolique pour chaque image.

15. Système de visualisation selon l'une quelconque des revendications précédentes 11 à 14, comprenant des moyens pour la mémorisation de l'attribution d'une ou de plusieurs images à la représentation d'une répartition et comprenant des moyens pour le rappel de l'attribution mémorisée de l'image ou des images à la représentation de la répartition pour la visualisation de l'image ou des images, après avoir sélectionner une nouvelle fois la répartition.

16. Système de visualisation selon l'une quelconque des revendications précédentes 11 à 15, comprenant des moyens pour le marquage d'une représentation d'une image dans la représentation de la répartition pour deux images ou plus, de telle sorte qu'après la sélection d'une répartition pour une image, l'image correspondant à la représentation marquée est visualisée dans une représentation image par image.
